# EUROPEAN PATENT APPLICATION

(11) **EP 4 657 929 A1**
(43) Date of publication of application: **03.12.2025**
(21) Application number: 25174825.7
(22) Date of filing: 07.05.2025
(51) Int. Cl.: H04W 52/02, H04B 7/024, H04W 72/121, H04W 28/088, H04W 52/00, H04W 24/02, H04B 7/00

(54) **DYNAMIC CLUSTERING**

(30) Priority: 29.05.2024 GB 202407575
(71) Applicant: IONX Networks Limited, Marlow, Buckinghamshire SL7 1EY (GB)
(72) Inventor: FAIRWEATHER, Kenneth James, Marlow, SL7 1EY (GB); PERSAUD, Marlon Peter, Marlow, SL7 1EY (GB)
(74) Representative: D Young & Co LLP

(57) **Abstract**

A computer-implemented method for performing dynamic clustering of radio devices in a Cooperative Multi-Point network, the network comprising a plurality of radio devices, one or more clusters of radio devices of the plurality of radio devices, one or more scheduler instances each associated with a cluster of the one or more clusters, and a controller, the method comprising: determining that a re-clustering condition associated with utilisation of one or more radio devices in a given cluster is satisfied, wherein radio devices in a given cluster are operable to be scheduled by a same scheduler instance; in response to determining that the re-clustering condition is satisfied: signalling a scheduler instance associated with the given cluster to remove the one or more radio devices from the given cluster; changing a processing resource allocation allocated for executing the one or more scheduler instances; and signalling a second scheduler instance to adopt the one or more radio devices.

## Description

### Technical Field and Background

The present disclosure relates to telecommunications networks and in particular to clustering of radio devices in Cooperative Multi-Point (CoMP) telecommunications networks, such as Mobile Network Operator (MNO) networks or Neutral Host (NH) networks which combines multiple MNO and/or private networks. More particularly, but not exclusively, described herein are techniques for performing dynamic clustering of radio devices.

Recently, the number of network-connected user devices has been increasing, which in turn increases the demand on mobile networks to provide high levels of network performance and capacity with minimal signal and connectivity issues. In order to support the increased number of connected user devices and meet the increased demand, increased network infrastructure and computing capacity has been deployed.

At least certain embodiments of the present disclosure address one or more of these problems as set out above.

### Summary

Aspects of the invention are set out in the accompanying claims.

Viewed from a first aspect, there is provided a computer-implemented method for performing dynamic clustering of radio devices in a Cooperative Multi-Point network, the network comprising a plurality of radio devices, one or more clusters of radio devices of the plurality of radio devices, one or more scheduler instances each associated with a cluster of the one or more clusters, and a controller, the method comprising: determining that a re-clustering condition associated with utilisation of one or more radio devices in a given cluster is satisfied, wherein radio devices in a given cluster are operable to be scheduled by a same scheduler instance; in response to determining that the re-clustering condition is satisfied: signalling a scheduler instance associated with the given cluster to remove the one or more radio devices from the given cluster; changing a processing resource allocation allocated for executing the one or more scheduler instances; and signalling a second scheduler instance to adopt the one or more radio devices.

The present inventors have identified that, while the demand placed on telecommunications networks and network infrastructure has been increasing in recent times, the variability in the demand has also been increasing. Indeed, supporting the increased demand results in increased energy usage, increased computing resource usage, increased cost, and increased infrastructure complexity. The present inventors have further identified that, particularly in CoMP deployments where a scheduler instance schedules operation of all radio devices in a given cluster, a limiting factor on network performance and capacity can be the processing capacity of the scheduler instance itself, i.e. the scheduler compute.

One way to ensure that a network can cope with peak network demand is to overprovision the network so that the network is able to cope with a worst-case peak utilisation. This approach uses a static deployment of scheduler compute capacity which ensures that the demand can be met by the network. However, as discussed herein, with such an approach, there are inevitably periods of time where the extra network capacity is not being used (such as during quieter times like during the night), resulting in wasted hardware, power, and computing resources. Further, with such an approach, a decision is taken as to the peak network demand the network should be designed to support. Over time, with the number of network-connected devices increasing, such a decision on the peak network demand may no longer be relevant or suitable for present network demand.

Thus, according to the present teaching, clustering of radio devices can be dynamically modified depending on network utilisation, and thus the processing resources allocated to the scheduler instances may also be dynamically modified depending on demand.

For example, during periods of relatively low utilisation, such as during night time or other off-peak times, un-utilised radio devices of a first cluster associated with a first scheduler instance can be re-allocated to a second cluster with a second scheduler instance, and the processing resources allocated to the first scheduler can then be reduced. For example, the first scheduler instance can be powered down as the first scheduler no longer needs to be able to support the first cluster. This saves power, cost, and provides a dynamic and scalable response to network utilisation. Indeed, during such periods of relatively low network utilisation, scheduler instances can be powered down and the overall scheduler compute reduced, thereby saving significant amounts power, cost, and processing resources.

On the other hand, during periods of relatively high utilisation, such as during peak periods like the evening, clusters of radio devices can be disaggregated, or split apart, and allocated additional scheduling instances/compute capacity. For example, a cluster of radio devices scheduled by a single scheduler can be split into two clusters, each cluster scheduled by its own scheduler instance. In this case, additional processing resources for a second scheduler instance can be allocated or a second scheduler instance can be powered up, to support the new cluster. Thus, the ratio of scheduler instances/compute to radio devices can be increased to support the increased network demand. In this way, the scheduler capacity can dynamically be modified depending on utilisation of the network.

Thus, as a result of the present techniques, network capacity and throughput is increased and the overall power usage of the network infrastructure for supporting varying levels of network demand is reduced.

The present approach is particularly advantageous compared to static deployments such as that described above where network resources are simply overprovisioned, as the present approach is able to scale up or down the scheduler compute depending on utilisation and thus may cope with varying demand while minimising the amount of power, cost, and computing resources required to support the network. Furthermore, over time, the present approach is able to scale up capacity to meet increasing network demand in a way that a static deployment cannot.

Indeed, the present approach is particularly scalable, as rather than deploying additional radio devices to increase the capacity of the network which can be time consuming and requires additional hardware, capacity can be increased by deploying additional compute/processing resources to support the schedulers. This is particularly advantageous when the schedulers are virtualised and provided in software. As mentioned above, the present inventors have identified that a network capacity bottleneck can be caused by the scheduler compute capacity rather than the number of radio devices. As a result, deployments can be simplified and scaled up or down depending on demand. For example, initially a simple arrangement can be deployed, minimising initial server costs and power use (that may be used to support the scheduler compute/instances), and additional compute resource can be added as the network becomes more utilised without needing to deploy additional radio device hardware, for example over time as demand increases in the long term, or even on a daily basis to account for the changing demand throughout the day and night.

In some examples, the method comprises receiving utilisation information from the scheduler instance associated with the given cluster, wherein determining that the re-clustering condition is satisfied is based on the received utilisation information. Thus, the scheduler instances may be configured to report on utilisation of the cluster they are responsible for scheduling, and the decision as to whether to re-cluster may be based on this utilisation. As a result, an accurate measure of utilisation can be used in the determination as to whether to re-cluster the radio devices, thereby reducing the likelihood of unnecessarily re-clustering and unnecessarily performing the associated processing. Determining that the re-clustering condition is satisfied may be based on determining that the utilisation information satisfies one or more conditions, such as a predetermined utilisation threshold.

In some examples, the utilisation information indicates the presence or absence of active connections between the one or more radio devices in the given cluster and one or more client devices. In examples, an active connection refers to a connection that is currently being used by user device connected to the radio device. In contrast, an idle or inactive connection refers to a connection to a radio device that is not currently being used by a user device (and that has not timed out for example). In some examples, the utilisation information may indicate the number of active connections or inactive connections, or alternatively it may indicate via a flag that an active or inactive connection is present. Thus, the nature of the radio device connections can efficiently be determined and shared in order to make the re-clustering decision. In some cases, it may be advantageous only to re-cluster a given cluster if there are no active connections, i.e. if no radio devices are currently using the connection (although the connection may be idle). For example, in some cases, in order to perform the re-clustering, the connections to radio devices are broken before being re-formed to the new scheduler instance, and so it can be advantageous to indicate whether there are currently any active connections that may be affected by the re-clustering.

In some examples, utilisation indicates a demand currently being placed on the network, and thus in some examples, the utilisation information indicates a demand currently being placed on the network. In examples, determining that the re-clustering condition is satisfied is based on the received utilisation information. In some examples, the utilisation information comprises information indicative of the utilisation. In some examples, utilisation information is reported by each scheduler instance indicating scheduler and radio device usage levels. For example, the utilisation information may comprise information indicating a volume of users and volume of traffic carried, and thus in some examples, the utilisation information indicates a demand currently being placed on the network. For example, a utilisation of X% may indicate that the network is operating at X% of its maximum capacity (be that a processing capacity of a scheduler instance, a total number of users the network is able to support, a total amount of traffic the network is able to support, a total number of radio devices having active connections at a given time that the scheduler is able to support, etc.). In some examples, utilisation may refer to a proportion of a total processing capacity of a scheduler that is being utilised at a given time. In some examples, utilisation may refer to a proportion of radio devices in a cluster that have active connections (relative to the total number of radio devices in that cluster, such as 3 of 8 radio devices have active connections).

In some examples, determining that the re-clustering condition is satisfied comprises: determining, based on the utilisation information, that the number of active connections of the one or more radio devices is below a predetermined threshold or that the number of the one or more radio devices having active connections is greater than a predetermined threshold. Thus, a time and computationally efficient determination of whether to re-cluster can be performed. Further, the thresholds as to when to re-cluster based on the number of active connections can be set in a configurable manner.

In some examples, for cluster aggregation (i.e. when a cluster is being removed and radio devices are being transferred to an existing cluster to allow the scheduler instance of the previous cluster to be powered down), determining that the re-clustering condition is satisfied may be based on determining that the number of active connections is zero. As mentioned above, transferring radio devices between clusters can involve disruption to the network connection of the user devices connected to that radio device, and so it can be advantageous to only move the radio devices across when the user device or radio device is not currently actively using the network connection. This can be repeated when a given radio device becomes inactive.

In some examples, for cluster disaggregation (i.e. when a cluster is being added and radio devices are being transferred from an existing cluster to the new cluster and an additional scheduler instance is to be powered up), determining that the re-clustering condition is satisfied may be based on determining that the number of active connections or data demand is greater than a predetermined threshold. For example, the predetermined threshold may correspond to a predetermined ratio or percentage of active radio devices compared to inactive radio devices or the total number of radio devices in the cluster, such as 75%, 80%, 90%, or 100% of active radio devices within a cluster. In these cases, the cluster may be determined to be highly utilised and so it would be advantageous to power up an additional scheduler instance and move one or more radio devices from the highly utilised cluster to the newly created cluster scheduled by the additional scheduler instance. In some examples, the predetermined threshold may correspond to a predetermined data demand. In some examples, determining that the re-clustering condition is satisfied (i.e. to perform cluster disaggregation) may be based on determining that a plurality of conditions are satisfied (for example that the data demand satisfies a predetermined threshold, that the number of active users satisfies another predetermined threshold, and that the time of day satisfies a predetermined condition). Re-clustering may be performed based on determining that a combination of one or more of a data demand, number of active users, and a time of day are all satisfied. As described herein, the present inventors have identified that the number of active users can consume a relatively large proportion of scheduler capacity. Indeed, the total capacity of a compute cluster (that may support a scheduler) is also limited in data capacity and so splitting/disaggregating clusters can increase data capacity as discussed further below.

As mentioned above, transferring radio devices between clusters can involve disruption to the network connection of the radio device, and so it can be advantageous to only move the radio devices across when the radio device is not currently actively using the network connection. This can be repeated when a given radio device becomes inactive.

In some examples, determining that the re-clustering condition is satisfied is in response to determining one or more of: that a current time of day satisfies a predetermined condition; that a determined historical utilisation satisfies a predetermined condition; and that a start condition indicating that re-clustering is to be performed is satisfied. Thus, the re-clustering may be triggered by one or more triggers that may be indicative that re-clustering would be advantageous.

For example, the current time of day may correspond to a time in a range of times that correspond to peak network usage times, such as during the evening, or alternatively to a time in a range of times that correspond to off-peak network usage times, such as during night-time or early morning hours. Thus, in some examples, the re-clustering may be triggered by the current time of day.

Additionally or alternatively, historical utilisation may be used to trigger the re-clustering. For example, for a given implementation, the network may experience periods of peak usage that follows a pattern, which may be determined from historical utilisation. Thus, the re-clustering may be triggered based on historical utilisation.

Additionally or alternatively, a start condition may indicate that re-clustering is to be performed. In examples, this could correspond to a user input causing the re-clustering to be triggered. In some examples, the start condition may correspond to a determined level of radio device utilisation, and so the re-clustering may be triggered based on the radio devices being utilised or under-utilised. This could be determined based on the utilisation information described above. Thus, the clustering approach is flexible and configurable depending on the specific implementation.

In some examples, the network further comprises a scheduler manager configured to manage the processing resource allocation of the one or more scheduler instances, and wherein changing the processing resource allocation comprises signalling the scheduler manager to change the processing resource allocation allocated for executing the one or more scheduler instances. The scheduler manager may thus be signalled to modify the processing resource allocation. Advantageously, the scheduler manager may be responsible for managing resources of the scheduler instances and so may be configured to dynamically power up and power down scheduler instances on demand, thereby allowing for a dynamic response to network utilisation.

In some examples, it is determined that the number of active connections of the one or more radio devices is zero and wherein the second scheduler instance is associated with a pre-existing cluster of radio devices, wherein changing the processing resource allocation comprises: in response to determining that removal of the one or more radio devices from the given cluster is to cause the number of remaining radio devices allocated to the given cluster to fall below a predetermined threshold, causing a processing resource allocation allocated to the scheduler instance of the given cluster to be reduced.

Thus, as discussed above in relation to cluster aggregation, when there are no active connections (and so an active session of the radio device will not be interrupted), and when the number of remaining radio devices allocated to the cluster falls below a predetermined threshold, the processing resources allocated to the scheduler instance may be reduced. In some examples, the predetermined threshold may be one. In other words, when the last remaining radio device is removed from a given cluster, the processing resources allocated to the scheduler instance associated with that cluster may be reduced. In some cases, this may comprise powering down the scheduler instance or reducing processing resources supporting the scheduler instance. It will be appreciated that the scheduler instance itself may be signalled to reduce its resources, or a scheduler manager or similar, which manages resource allocation for multiple scheduler instances, may be signalled to reduce the resource allocation of the scheduler instance or power down the scheduler instance.

In some examples, causing the processing resource allocation allocated to the scheduler instance of the given cluster to be reduced comprises causing the scheduler instance of the given cluster to be powered down. Thus, in these examples, the scheduler instance may be powered down and as a result power may be saved that would otherwise have been used to maintain its operation. In some examples, reducing the processing resource allocation, rather than powering down, comprises reducing the processing resource allocation for example to a lightweight mode, or a power saving mode. As a result, during periods of lower network utilisation, scheduler instances can be powered off or the processing resources reduced when not in demand. In doing so, significant energy savings can be realised.

In some examples, causing the processing resource allocation allocated to the scheduler instance of the given cluster to be reduced comprises signalling a scheduler manager of the scheduler instance to reduce the processing resource allocation of the scheduler instance or power down the scheduler instance. Thus, the scheduler manager may be caused to change the resource allocation, for example through a message or signal indicating that the resource allocation is to be changed.

In some examples, it is determined that the number of the one or more radio devices having active connections is greater than a predetermined threshold, wherein changing the processing resource allocation comprises: initialising the second scheduler instance and causing additional processing resources to be allocated to the second scheduler instance.

Thus, as discussed above in relation to cluster disaggregation, when a number of radio devices having active connections is greater than a predetermined threshold (such as greater than a predetermined percentage of all radio devices), a second scheduler instance (i.e. a new scheduler instance) may be initialised and may be set up. In some examples, a request may be sent to a scheduler manager to allocate processing resources to the second scheduler instance and create the second scheduler instance. The scheduler manager may be a manager of the scheduler instances and may manage the resources allocated to the scheduler instances. As a result, an additional scheduler instance can be added and thus the network capacity can be increased.

In some examples, causing additional processing resources to be allocated to the second scheduler instance comprises signalling a scheduler manager to create the second scheduler instance and allocate additional processing resources to the second scheduler instance. In some examples, the scheduler manager may be configured to manage resource allocation of one or more other scheduler instances.

In some examples, signalling the scheduler instance and the second scheduler instance comprises sending a message indicating the one or more radio devices to remove or adopt to the scheduler instance and the second scheduler instance. Thus, the scheduler instances can be quickly notified which radio devices they are to remove or adopt, reducing the completion time for the re-clustering.

In some examples, the message sent to the second scheduler instance comprises one or more signatures assigned to the one or more radio devices for broadcasting by the one or more radio devices. Thus, the signature allocation may be performed centrally and then the scheduler instances may be notified of the signatures the radio devices are to broadcast. This increases flexibility in the signature generation algorithm and allows the signature generation algorithm, which may be performed centrally, to consider macroscopic views of the network as a whole, rather than being performed at the scheduler level. Further, the processing resources of the scheduler instances themselves need not be used to determine signatures for the radio devices, thereby increasing the processing resources available for performing scheduling.

In some examples, the utilisation information comprises information indicating the number of inactive radio devices in relation to the total number of radio devices in the given cluster, and information identifying the inactive radio devices. As a result, the radio devices that may be removed from a given cluster can be identified efficiently, and further the utilisation of the cluster as a whole can also be determined efficiently.

Viewed from a second aspect, there is provided a network controller comprising one or more processors configured to perform the method described herein. Thus, a centralised network controller may perform the method. In some examples, the network controller is a Radio Access Network (RAN), Intelligent Controller (RIC). The co-ordination of cluster aggregation and disaggregation may be advantageously performed by an entity that has a macroscopic view of the network utilisation, and thus a centralised controller may advantageously be used to coordinate the re-clustering. In some examples, the centralised controller, such as a RIC, can dynamically calculate the optimum power strategy using historical utilisation measurements to predict when to grow and shrink the cell clusters.

Viewed from a third aspect, there is provided a computer-readable medium comprising instructions which, when executed by one or more processors, cause the one or more processors to perform the method described herein.

Viewed from a fourth aspect, there is provided a computer-implemented method for a scheduler arrangement having a scheduler instance and a scheduler manager, the scheduler arrangement in a Cooperative Multi-Point network, the network comprising a plurality of radio devices, one or more clusters of radio devices of the plurality of radio devices, and a controller, the method comprising: determining utilisation information indicative of a utilisation of one or more radio devices in a cluster associated with the scheduler instance; sending the utilisation information to the controller; receiving an instruction from the controller to remove or adopt a radio device of the plurality of radio devices; removing or adopting the radio device based on the instruction to remove or adopt the radio device; receiving an instruction to reduce a processing resource allocation allocated to the scheduler instance or to create a further scheduler instance; and reducing a processing resource allocation allocated to the scheduler instance in response to the instruction to reduce the processing resource allocation allocated to the scheduler or allocating additional processing resources to the further scheduler instance in response to the instruction to create a further scheduler instance.

In some examples, the utilisation information indicates the presence or absence of active connections between the one or more radio devices in the given cluster and one or more client devices. Thus, the nature of the radio device connections can efficiently be determined and shared in order to make the re-clustering decision.

In some examples, reducing the processing resource allocation comprises powering down the scheduler instance. In these examples, the scheduler instance may be completely turned off and as such the processing resources and power may be saved that would otherwise have been used to support the scheduler instance during periods of low network utilisation.

In some examples, the scheduler instances are virtualised scheduler instances, for example virtual machine instances or virtualised applications or containers. In some examples, the scheduler manager is a virtual machine manager, container manager or hypervisor. Thus, the schedulers may be virtualised, which provides a number of advantages. For example, the virtual scheduler instances may be efficiently scaled up and down depending on network utilisation as discussed herein. Further, the virtualisation of schedulers reduces the complexity and cost of the deployment as hardware is not required to be deployed and maintained. Furthermore, the computing resources that support the virtualised schedulers (and manager) may be provided in the cloud or remotely located from the radio device deployment, thereby increasing flexibility and scalability of the approach and allowing for the underlying computing resources to be provided by a third party.

Thus, as discussed above, clusters of radio devices can be dynamically modified depending on a utilisation condition so as to aggregate or disaggregate clusters of devices depending on utilisation, and thus the processing resources allocated to the scheduler instances can also be dynamically modified. Further, network capacity and throughput is increased and the overall power usage of the network infrastructure for supporting varying levels of network demand is reduced.

Viewed from a fifth aspect, there is provided a system for supporting a Cooperative Multi-Point network, the network comprising a plurality of radio devices, one or more clusters of radio devices of the plurality of radio devices, one or more scheduler arrangements each associated with a cluster of the one or more clusters, and a controller, the system comprising a controller configured to perform the method described herein, and a scheduler arrangement configured to perform the method also described herein.

Other aspects will also become apparent upon review of the present disclosure, in particular upon review of the Brief Description of the Drawings, Detailed Description and Claims sections.

### Brief Description of the Drawings

Examples of the disclosure will now be described, by way of example only, with reference to the accompanying drawings in which:
Figure 1: schematically illustrates an example telecommunications network in which teachings of the disclosure can be implemented.
Figure 2: schematically illustrates an example telecommunications network under normal operation in which teachings of the disclosure can be implemented.
Figure 3: schematically illustrates an example telecommunications network in which cluster aggregation as described herein can be implemented.
Figure 4: schematically illustrates an example telecommunications network in which cluster disaggregation as described herein can be implemented.
Figure 5: schematically illustrates a method for performing dynamic clustering of radio devices according to the teachings of the disclosure.
Figure 6: schematically illustrates a method for performing dynamic clustering of radio devices according to the teachings of the disclosure.
Figure 7: schematically illustrates a ladder diagram for performing dynamic clustering of radio devices according to the teachings of the disclosure.
Figure 8: schematically illustrates a ladder diagram for performing dynamic clustering of radio devices according to the teachings of the disclosure.
Figure 9: schematically illustrates an example of an electronic device which can be used to implement teachings of the disclosure.

While the disclosure is susceptible to various modifications and alternative forms, specific example approaches are shown by way of example in the drawings and are herein described in detail. It should be understood however that the drawings and detailed description attached hereto are not intended to limit the disclosure to the particular form disclosed but rather the disclosure is to cover all modifications, equivalents and alternatives falling within the spirit and scope of the claimed invention.

It will be recognised that the features of the above-described examples of the disclosure can conveniently and interchangeably be used in any suitable combination.

### Detailed Description

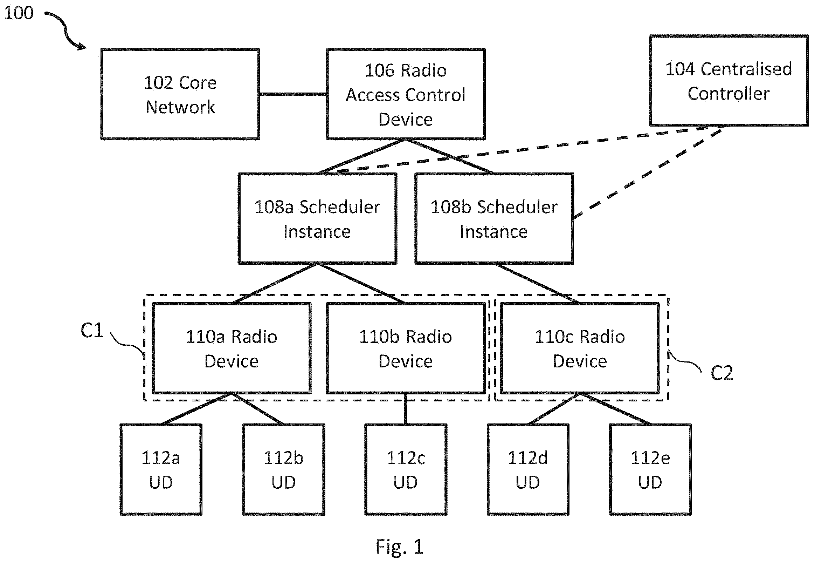

Figure 1 shows an example telecommunications network 100 in which teachings of the present disclosure can be implemented.

As shown in figure 1, telecommunications network 100 includes a core network 102, a centralised controller 104, a radio access control device 106, scheduler instances 108a and 108b, radio devices 110a, 110b, and 110c, and user devices 112a, 112b, 112c, 112d, and 112e. Network connections between the various devices are shown by solid lines. It will be appreciated that each network connection depicted in figure 1 can represent a direct network link but also a network connection through a plurality of links through one or more intermediate devices or nodes. The dashed lines associated with the centralised controller 104 represent logical paths between the centralised controller 104 and the scheduler instances 108a, 108b by which the centralised controller 104 can provided updated scheduling capacities for the radio devices 110a, 110b, 110c to the scheduler instances 108a, 108b.

It will be appreciated that centralised controller 104 may be a single dedicated device located somewhere in the telecommunications network 100, combined with one or more of the other network devices, distributed across a plurality of dedicated/shared devices and/or be hosted in the cloud. The exact network path between the centralised controller 104 and the scheduler instances 108a, 108b is omitted for clarity. It will be appreciated that the specific number and layout of devices is merely an example useful for illustrating a telecommunications network in which the teachings of the disclosure can be implemented. It will be further appreciated that while the devices in figure 1 are shown as separate devices, in other examples one or more of these devices may be combined and/or co-located. For example, one or more scheduler instances and one or more radio devices may be combined into one device, thereby reducing latency and allowing for the sharing of hardware. In other examples, the one or more scheduler instances and one or more radio devices may be provided in separate devices or remote from each other, thereby allowing for disaggregation of functionally which can increase efficiency, e.g. by avoiding redundant capacity for higher-level functionality and for allowing virtualisation (for example of one or more scheduler instances). Similarly, the radio access control device can be provided in the same device as one or more scheduler instances or may be provided as a separate device.

As shown in figure 1, telecommunications network 100 is a Co-ordinated Multi Point (CoMP) cellular deployment. In particular, individual radio devices 110 (also referred to herein as transmission/reception points (TRPs)) are clustered together into a coordinated group, acting as a single, larger cluster/cell, as shown by C1 and C2 and their respective dashed boxed around radio devices 110a and 110b, and radio device 110c (additional radio devices are omitted for clarity), respectively. It will be appreciated that each cluster may comprise two or more radio devices. In this way, radio devices may be clustered together to share network resources. A single scheduler instance is then used for the whole cluster/cell, and different scheduler instances are used for each cluster of radio devices. Again, as shown in figure 1, C1 comprises radio devices 110a and 110b and these radio devices are operable to be scheduled by scheduler instance 108a, and C2 comprises radio device 110a which is operable to be scheduled by scheduler instance 108b. Examples of CoMP network topologies include ORAN Split 6 and Split 7.x implemented using Dynamic Point Scheduling (DPS) or Front Haul Multiplexing (FHM).

The allocation of radio devices 110 to clusters may be determined by the scheduler instances 108, or by the centralised controller 104, or by a combination of the scheduler instances 108 and centralised controller 104. For example, the centralised controller 104 may signal a scheduler instance to adopt or remove a given radio device from its cluster of radio devices, thereby controlling the allocation of radio devices and clusters.

Further, in CoMP, as discussed, a single scheduler may operate to schedule radio communication for all radio devices (i.e. TRPs) in the cluster associated with that single scheduler instance. As a result, when a user device changes connectivity from a first radio device in a cluster to a second radio device in that cluster, because the same scheduler instance operates to schedule both radio devices, a handover process (such as a 3GPP or standard mobile telephony handover process) is not performed (as discussed above). However, when a user device changes connectivity from a radio device in a cluster to a radio device in a different cluster (for example due to relative motion between the user device and the radio devices), i.e. at a cluster boundary, because the radio devices are not scheduled by the same scheduler instance, a handover process is performed. This handover process may be a handover process conforming to one or more standards (as regulated by a standards body), such as a 3GPP handover process.

The centralised controller 104 can include a Radio Access Network Intelligent Controller (RIC), and thereby act to optimise and manage radio resources in a Radio Access Network (RAN). Further, it can operate as part of a 5G network and/or as part of an Open RAN network. In some examples, the centralised controller can operate in accordance with one or more standards, for example from 3GPP, ITU, O-RAN ALLIANCE and/or Small Cell Forum. Thereby interoperability with other devices and networks can be ensured.

The telecommunications network can comprise a radio access control device 106, the radio access control device being operable to manage access control for one or more devices in the telecommunication network. It will be appreciated that the radio access control device 106 can be present or omitted, and in some cases may be combined with the centralised controller 104. In some examples, the radio access control device comprises a Centralised Unit (CU). Thereby the radio access control device 106 can operate as part of a 5G network and/or as part of an Open RAN architecture. In some examples, the radio access control device can operate in accordance with one or more standards, for example from 3GPP, ITU, O-RAN ALLIANCE and/or Small Cell Forum. Thereby interoperability with other devices and networks can be ensured.

The scheduler instances 108 are operable to schedule networking operations of the radio devices 110 to which they are connected. In particular, the scheduler instances 108 manage radio communication (e.g. frequencies, time slots, and/or transmission power) to one or more user devices 112 connected to the one or more radio devices 110. In some examples, a scheduler instance comprises a Distributed Unit (DU). Thereby the scheduler instances 108 can operate as part of a 5G network and/or as part of an Open RAN architecture. In some examples, the scheduler instance can operate in accordance with one or more standards, for example from 3GPP, ITU, O-RAN ALLIANCE and/or Small Cell Forum. Thus, interoperability with other devices and networks can be ensured. Scheduler instances 108 may in some examples be virtualised in a virtualisation environment or provided in software and may thus be virtual machines or software, with the resource allocation of scheduler instances managed by a scheduler manager (such as a virtual machine manager or hypervisor or container manager). In some cases, the scheduler instances may be remote from the radio devices and connected thereto by a network connection. For example, the scheduler instances 108 may be provided in a cloud computing server or arrangement.

The radio devices 110 act to handle radio frequency (RF) transmission and reception to user devices 112. In examples, the radio devices 110 are MNO radio devices, able to operate on multiple frequency bands and for one or more mobile network operators. Thus, the radio devices 110 may be multi-MNO radio devices. In other examples, the radio device 110 are NH radio devices. It will be appreciated that the radio devices 110 may be able to support multiple MNOs and also NH networks simultaneously. In some cases, each radio device may comprise multiple radios, each radio able to provide a user device with connectivity to a certain frequency band. For example, each radio device may be able to provide connectivity via three or four or more different frequency bands. In some examples, each of the plurality of radio devices comprise one or more Radio Units (RU). Thereby the radio devices 110 can operate as part of a 5G network and/or as part of an Open RAN architecture. In some examples, the radio device can operate in accordance with one or more standards, for example from 3GPP, ITU, O-RAN ALLIANCE and/or Small Cell Forum. Thus, interoperability with other devices and networks can be ensured.

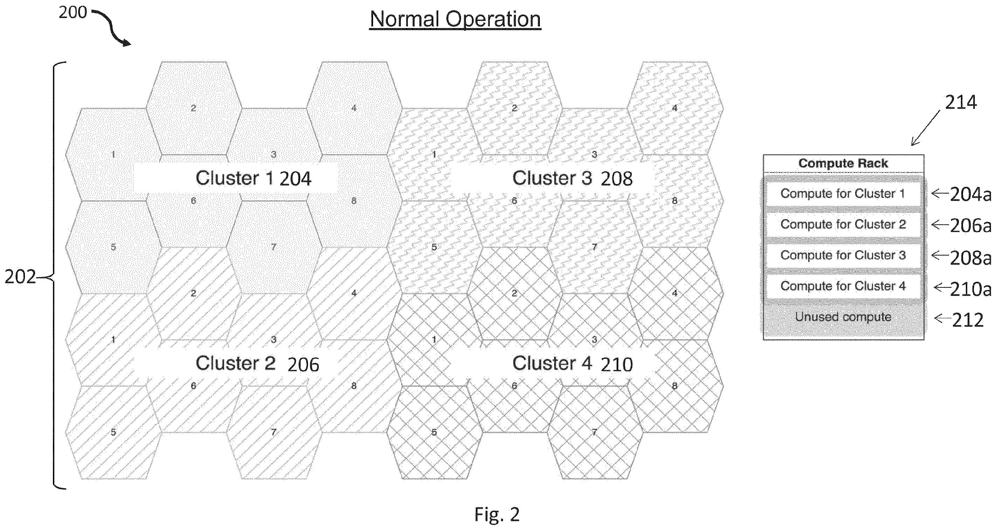

The techniques of the present disclosure, in particular the dynamic re-clustering of radio devices, will now be described with reference to figures 2 to 9. The techniques described in relation to figures 2 to 9 may be performed in the environment of figure 1.

Normal operation of a network during a period of moderate utilisation (i.e. Normal Operation') will now be described with reference to figure 2. Moderate utilisation may correspond to between 20% and 80% utilisation, for example, although it will be appreciated that this may vary and depend on implementation.

In some examples, utilisation may indicate a volume of users and volume of traffic carried, and thus in some examples, the utilisation indicates a demand currently being placed on the network as a proportion of the total demand or capacity that the network is able to support. For example, a 20 to 80% utilisation may indicate that the network is operating at 20 to 80% of its maximum capacity (be that a processing capacity of a scheduler instance, a total number of users the network is able to support, a total amount of traffic the network is able to support, a total number of radio devices having active connections at a given time that the scheduler is able to support, etc.). In some examples, utilisation may refer to a proportion of a total processing capacity of a scheduler that is being utilised at a given time. In some examples, utilisation may refer to a proportion of radio devices in a cluster that have active connections (relative to the total number of radio devices in that cluster, such as 3 of 8 radio devices have active connections).

As shown in figure 2, network 200, which is a CoMP network such as that described in relation to figure 1, comprises radio devices 202 (also referred to as TRPs), clustered into 4 clusters of 8 radio devices including cluster 1 204, cluster 2, 206, cluster 3 208, cluster 4 210 (with the different clusters shown by different hatching). As shown, the number of radio devices per scheduler is 8. Network 200 and radio devices 202 may correspond to network 100 and radio devices 202 of figure 1.

Also shown in figure 2 is compute rack 214. The compute rack 214 may be a server configured to provide processing resources (i.e. compute) for the schedulers of the clusters 204, 206, 208, and 210. The compute rack 214 may be cloud-based, and in some cases may be provided by a third party. During normal operation, as shown in figure 2, compute rack 214 includes compute for cluster 1 204a, compute for cluster 2 206a, compute for cluster 3 208a, and compute for cluster 4 210a. These computes correspond to the processing resources allocated for the schedulers of each of the respective clusters. In other words, the compute for cluster 1 204a corresponds to the compute for the scheduler instance of cluster 1 204, and so on.

Compute rack 214 also includes unused compute 212, which corresponds to compute in the compute rack 214 which is not currently allocated to providing compute for a scheduler instance of a cluster. From one perspective, the unused compute 212 is compute that could potentially be used to support an additional scheduler instance. It will be appreciated that the unused compute 212 may not actually be part of the compute rack 214, and it may instead represent compute that can be added to the compute rack 214 on demand, for example as a result of increasing the compute rack 214 allowance provided by a third party.

While each radio device 202 of the network 200 is moderately utilised, as shown by the 'Normal Operation' of figure 2, the arrangement of figure 2 represents a balance between power consumption and cellular throughput.

However, during periods of low network utilisation, for example at late evening (such as 11pm onwards), early morning (such as before 6am), or during weekends, the present inventors have identified that each scheduler instance (i.e. compute for each cluster) has a relatively high static power consumption (e.g. 25% of the power consumption of a blade server). Thus, given the low network utilisation, a larger number of radio devices per scheduler instance can be used without compromising cellular performance. In other words, it would be advantageous to minimise the active compute allocated to supporting the scheduler instances while still being able to support the network demand. Low utilisation may correspond to below 20% utilisation, for example, although it will be appreciated that this may vary and depend on implementation.

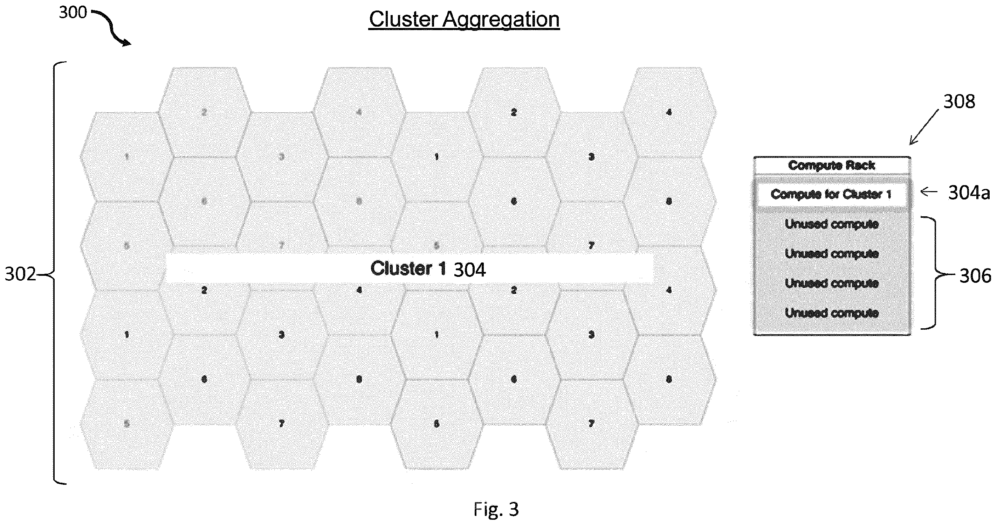

As shown with reference to figure 3, during such periods of low network utilisation, cluster aggregation can be performed to reduce the total amount of compute resources used to support the scheduler instances. Cluster aggregation refers to reducing the total number of clusters (and thus scheduler instances) by combining radio devices into a cluster with a larger number of radio devices. In other words, cluster aggregation refers to the process of increasing the number of radio devices per cluster/scheduler instance.

Figure 3 shows a similar arrangement to that of figure 2. Figure 3, like figure 2, shows a network 300 comprising radio devices 302. As shown in figure 3, unlike figure 2, cluster 1 304 includes all 32 radio devices 302. In figure 2, these radio devices were shared between 4 clusters of 8 radio devices, each cluster scheduled by a different scheduler instance. As a result, in figure 3, the number of radio devices per scheduler instance (i.e. per cluster) is 32. Accordingly, as the number of clusters has been reduced and thus the number of scheduler instances has been reduced, the amount of compute required to support the scheduler instances can also be reduced. This is shown by compute for cluster 1 304a and the unused compute 306 of the compute rack 308.

In other words, when changing from normal operation as shown in figure 2 to low utilisation and thus cluster aggregation shown in figure 3, the compute for clusters 2, 3, and 4 of figure 2 is no longer required. Clusters 2, 3, and 4 can therefore be removed and the compute that was supporting the scheduler instances for these clusters can therefore be powered down. As each cluster uses its own Cell ID, user devices that were connected to the removed clusters can then use normal handover or cell search procedures to attach to the new larger cluster (i.e. cluster 1 304). It will be appreciated that, in examples where the compute rack 308 is provided by a third party, the compute allowance provided by the third party could be dynamically reduced.

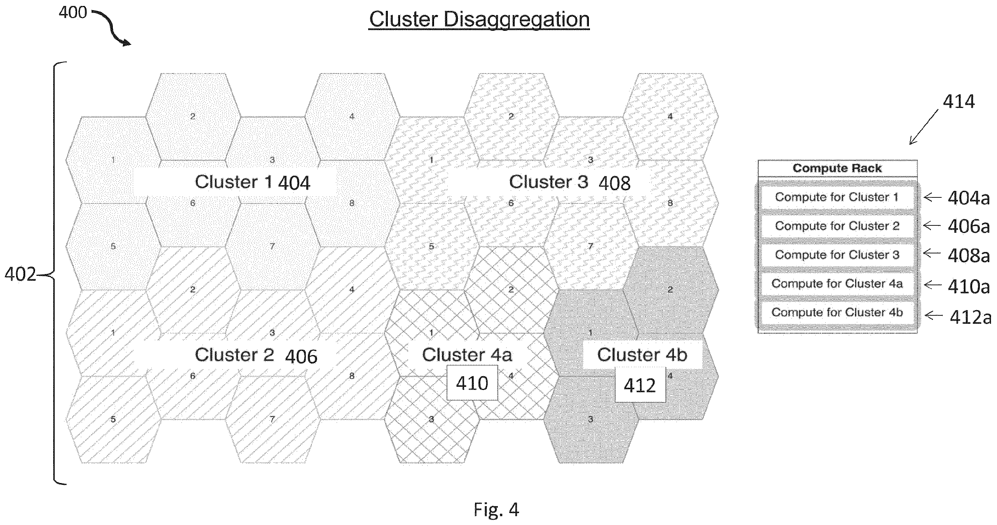

In contrast to the cluster aggregation of figure 3, during periods of high network utilisation, such as during diurnal peak usage hours or special events, to overcome scheduler capacity limitations (as identified by the present inventors as a bottleneck in network capacity), cluster disaggregation can be performed which involves splitting apart clusters to create an additional cluster and adding new compute resources for the additional cluster. This is shown in figure 4. High utilisation may correspond to above 80% utilisation, for example, although it will be appreciated that this may vary and depend on implementation. Diurnal peak usage hours may correspond to hours between 9am and 5pm, for example peaking at 9am, 12.30pm, and 5pm, or alternatively may peak in the evening, depending on deployment type.

Figure 4 shows a similar arrangement to that of figures 2 and 3. Figure 4, like figure 2, shows a network 400 comprising radio devices 402, and cluster 1 404, cluster 2 406, and cluster 3 408. As shown in figure 4, unlike figure 2, previous cluster 4 has been split into 2 clusters, cluster 4a 410 and cluster 4b 412. Each of cluster 4a 410 and cluster 4b 412 include 4 radio devices, whereas previous cluster 4 (as shown in figure 2) included 8 radio devices.

Compute rack 414 includes compute for cluster 1 404a, compute for cluster 2 406a, compute for cluster 3 408a, compute for cluster 4a 410a, and compute for cluster 4b 412a. Thus, in comparison to arrangement of figure 2, the unused compute has been allocated to the compute for cluster 4b 412a and the compute for cluster 4 has been allocated to the compute for cluster 4a 410a. In other words, additional processing resources have been allocated for supporting the additional cluster and its scheduler instance. As a result, for cluster 4a 410 and cluster 4b 412, the number of radio devices per scheduler instance is 4 (reduced from 8 in figure 2). Thus, the scheduler instances for clusters 4a and 4b are responsible for scheduling fewer radio devices, and thus the network throughput can be increased as the scheduler has more capacity for scheduling each individual radio device.

In other words, when changing from normal operation as shown in figure 2 to high utilisation and thus cluster disaggregation shown in figure 4, additional compute is allocated and used to support a new cluster (cluster 4b, with cluster 4a corresponding to previous cluster 4). As each cluster uses its own Cell ID, user devices can use normal handover or cell search procedures to attach to the new cluster (i.e. cluster 4b 412). It will be appreciated that, in examples where the compute rack 412 is provided by a third party, the compute allowance provided by the third party could be dynamically increased.

Thus, as described herein, dynamic re-clustering can be performed based on network utilisation to provide a number of advantages, including:
- Increase power efficiency when cell utilisation is low.
   During periods of low network activity, aggregating multiple clusters into a single cluster allows the number of processing footprints (i.e. scheduler instances/compute allocated for the scheduler instances) to be reduced. As activity increases (e.g. during weekday mornings), a large cluster can be split back into smaller clusters, physically turning on new server instances to deal with the new clusters.
- Increase throughput when cell utilisation is high.
   As discussed herein, scheduler throughput is a limiting factor in CoMP cell performance. Splitting CoMP clusters into smaller groups and adding new scheduling compute resources can increase network performance. For example, if a cluster scheduler has a scheduling limit of X Gbps, splitting the cluster into two increases the scheduling limit to 2X Gbps.

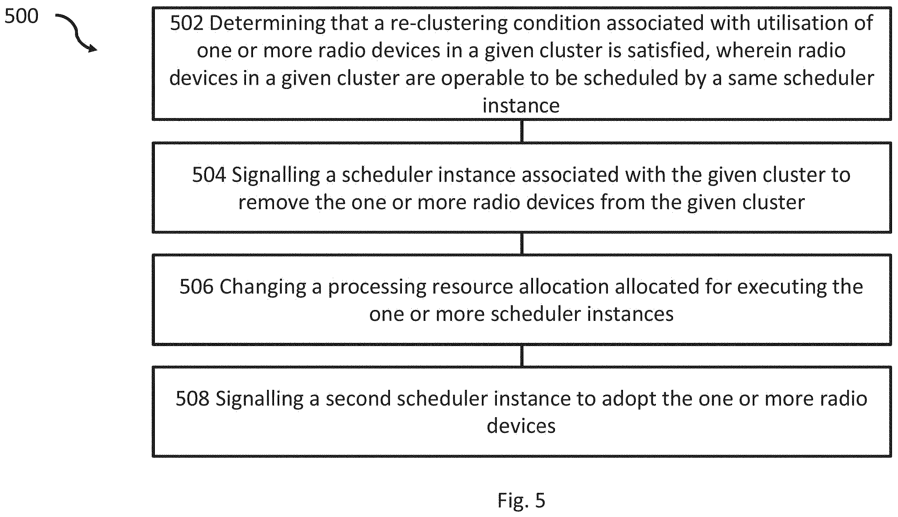

A method 500 for performing dynamic clustering of radio devices in a CoMP network will now be described with reference to figure 5. Method 500 may be performed by the centralised controller 104 of figure 1 for example, such as a RIC. Further, method 500 may be performed in the network 100, 200, 300, or 400 of figures 1, 2, 3, and 4.

Method 500 includes steps 502, 504, 506, and 508. Step 502 includes determining that a re-clustering condition associated with utilisation of one or more radio devices in a given cluster is satisfied, wherein radio devices in a given cluster are operable to be scheduled by a same scheduler instance. Step 502 may be performed in response to determining that a start condition indicating that re-clustering is to be performed is satisfied. For example, step 502 may be performed in response to determining that a current time of day satisfies a predetermined condition, such as falling within a predetermined time period, such as between the hours of 5pm and 11pm, 6am and 9am, and/or 11pm and 6am, for example.

Further, step 502 may be performed in response to determining that a network utilisation satisfies a predetermined condition, such as the network utilisation exceeds or falls below a predetermined network utilisation threshold. The network utilisation may refer to a historical network utilisation, and thus step 502 may be performed based on a predicted need to check whether re-clustering is to be performed. In other examples, step 502 may be performed periodically or randomly.

Determining that the re-clustering condition is satisfied may be based on received utilisation information, which may indicate a demand currently being placed on the network. Determining that the re-clustering condition is satisfied thus may be based on the utilisation information indicating that the demand currently being placed on the network satisfies a predetermined condition, such as a predetermined demand threshold. The utilisation information may indicate the presence or absence of active connections between one or more radio devices in the given cluster and one or more client devices. The utilisation information may also comprise information indicating the number of inactive radio devices in relation to the total number of radio devices in the given cluster, and information identifying the inactive radio devices. Thus, the re-clustering condition may be determined as being satisfied when the number of active connections is zero, or when the number of active connections is greater than a predetermined threshold, for example corresponding to a predetermined threshold indicative of a high network utilisation (such as 80% of radio devices being utilised).

Step 504 includes signalling a scheduler instance associated with the given cluster to remove the one or more radio devices from the given cluster. Signalling the scheduler instance may include sending a message indicating the one or more radio devices to remove to the scheduler instance. In some examples, signalling the scheduler instance may include sending a message indicating that the one or more radio devices are to enter an adoption state. This signalling may cause the scheduler instance to remove the one or more radio devices. A scheduler instance may remove a radio device in a number of ways. For example, the scheduler instance may stop sending packets through the SCTP (Stream Control Transmission Protocol) connection to the radio device, or a message may be sent to the radio device that the radio device is being dropped/removed. In response, the radio device may enter an 'adoption state', where the radio device looks for a response to its SCTP connection request. In some cases, a protocol such as Small Cell Forum nFAPI or ORAN Split 7.2x may be used, which includes PHY start/stop messages to enable/disable radio transmission.

Step 506 includes changing a processing resource allocation allocated for executing the one or more scheduler instances. Changing the resource allocation may include signalling the resource allocation to be changed, thereby causing the resource allocation to be changed. In some examples, a scheduler instance manager may be signalled to change the resource allocation allocated for executing the one or more scheduler instances. Changing the resource allocation may include reducing the resource allocation, or increasing the resource allocation. For example, in the case of cluster aggregation, the resource allocation may be reduced, for example by the powering down of a scheduler instance (i.e. the compute supporting the scheduler instance). In the case of cluster disaggregation, the resource allocation may be increased, for example by powering up additional compute to support an additional scheduler instance. Step 506 may thus include changing a processing resource allocation by signalling a scheduler instance manager to change the resource allocation, to cause the scheduler instance manager to change the resource allocation. In some examples, step 506 includes sending a message indicating that the processing resource allocation is to be changed to cause the change in resource allocation.

Step 508 includes signalling a second scheduler instance to adopt the one or more radio devices. In other words, the one or more radio devices removed as a result of step 504 are then adopted as a result of step 508. Signalling the second scheduler instance may include sending a message indicating the one or more radio devices to adopt to the second scheduler instance. This signalling may cause the second scheduler instance to adopt the one or more radio devices. Further, in examples, the message sent to the second scheduler instance may include one or more signatures assigned to the one or more radio devices for broadcasting by the one or more radio devices. In this way, signature assignment may advantageously be performed centrally by the controller.

A scheduler may adopt a radio device in a number of ways. For example, a radio device can send SCTP connection requests (i.e. Ethernet packets using the SCTP protocol). These connection requests can be routed to the intended scheduler instance. When the scheduler instance detects a connection request, the scheduler instance can respond and the scheduler instance and radio device exchange protocol messages, including messages indicating the broadcast signatures to use. A user device that then connects to that radio device can then be scheduled along with the other current active users.

It will be appreciated that method 500 includes both the cluster aggregation and cluster disaggregation functionality described herein. For both cluster aggregation and disaggregation, a radio device is removed from a first cluster, and then adopted by a second cluster. For cluster aggregation, the first cluster is then removed and the compute supporting its scheduler instance is reduced and powered down. For cluster disaggregation, the second cluster is a newly created cluster, for which additional processing resources are allocated, and the first cluster is maintained.

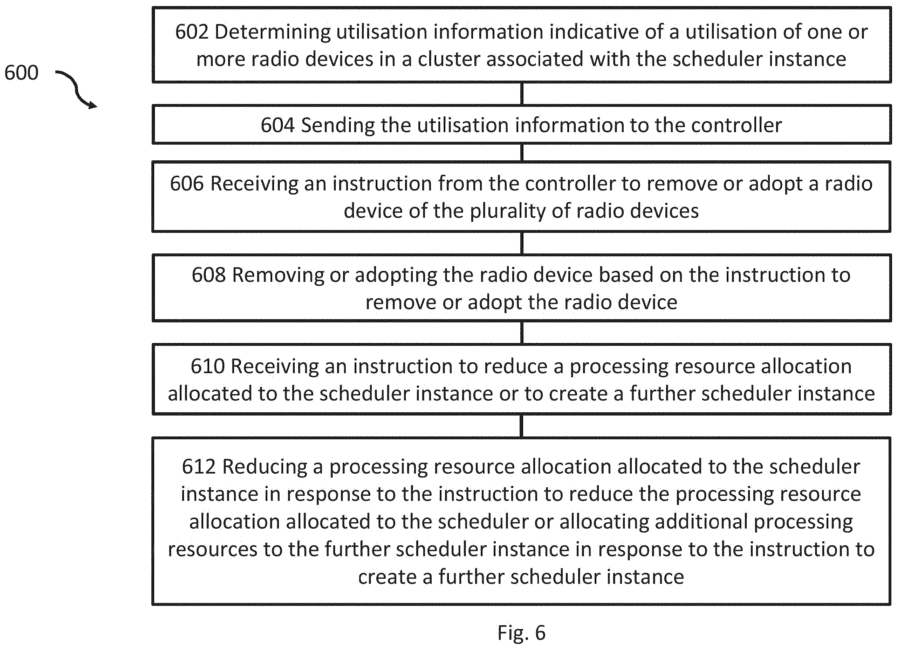

A method 600 for performing dynamic clustering of radio devices in a CoMP network will now be described with reference to figure 6. Method 600 may be performed by a scheduler arrangement having a scheduler instance and scheduler manager, such as the scheduler instances 108 of figure 1 or scheduler instances associated with the cluster compute of figures 2, 3, and 4 for example. Further, method 600 may be performed in the network 100, 200, 300, or 400 of figures 1, 2, 3, and 4.

Method 600 includes steps 602, 604, 606, 608, 610 and 612. Step 602 includes determining utilisation information indicative of a utilisation of one or more radio devices in a cluster associated with the scheduler instance. This may include the scheduler instance and/or scheduler instance manager determining the utilisation information, for example by measuring a utilisation of one or more radio devices, or by receiving a utilisation report from the one or more radio devices. The utilisation information may include utilisation information for every radio device in the cluster scheduled by the scheduler instance or a subset of the radio devices scheduler by the scheduler instance. The utilisation information may indicate the presence or absence of active connections between the one or more radio devices in the cluster and one or more client devices. For example, the scheduler instance may be configured to determine whether a given radio device currently has an active connection to a user device, and/or determine how many active connections a given radio device currently has.

Step 604 includes sending the utilisation information to the controller. The scheduler instance and/or scheduler manager may send the utilisation information to the controller.

Step 606 includes receiving an instruction from the controller to remove or adopt a radio device of the plurality of radio devices. The instruction may be received by the scheduler instance, and the instruction may be received in response to the sending of the utilisation information of step 604.

Step 608 includes removing or adopting the radio device based on the instruction to remove or adopt the radio device. The scheduler instance may remove or adopt the radio device based on the received instruction.

Step 610 includes receiving an instruction to reduce a processing resource allocation allocated to the scheduler instance or to create a further scheduler instance. The scheduler instance manager may receive the instruction to reducing a processing resource allocation or create a further scheduler instance. As discussed herein, the scheduler instance manager may manage resource allocation for the scheduler instances. As also discussed herein, in some examples, the scheduler instances may be virtualised scheduler instances and the scheduler instance manager may be a virtualised scheduler instance manager or container manager.

Step 612 includes reducing a processing resource allocation allocated to the scheduler instance in response to the instruction to reduce the processing resource allocation allocated to the scheduler or allocating additional processing resources to the further scheduler instance in response to the instruction to create a further scheduler instance. Step 612 may be performed by the scheduler instance manager. In some examples, reducing the processing resource allocation comprises powering down the scheduler instance (like that described in relation to figure 3). Allocating additional processing resources may comprise creating the further scheduler instance and allocating additional processing resources to support the further scheduler instance (like that described in relation to figure 4).

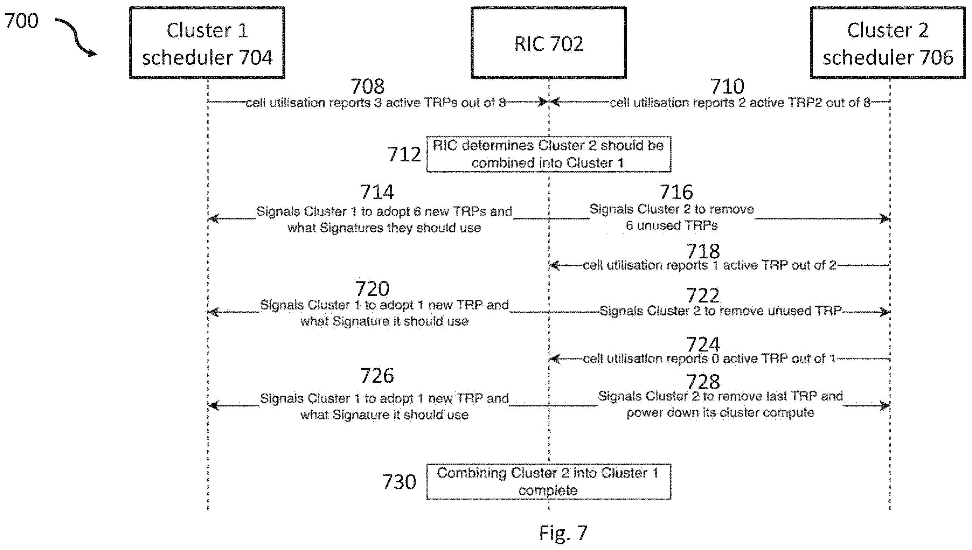

An example process 700 for cluster aggregation will now be described with reference to figure 7. Figure 7 shows interactions between cluster 1 scheduler 704, RIC 702 (i.e. a controller), and cluster 2 scheduler 706. Process 700 may be performed in any of networks 100, 200, 300, or 400 of figures 1, 2, 3, and 4. RIC 702 may perform method 500, and cluster 1 scheduler 704 and cluster 2 scheduler 706 may perform method 600.

TRPs typically have managed network connections. To move a TRP from one cluster to another may mean breaking its network connection and creating a new one from its adopted cluster (e.g. SCTP network connections). As this activity would interrupt active user device connections, TRPs may be moved in a piecemeal manner to a new cluster when they are deemed to have only idling user devices connected. Once all TRPs have been adopted by a new cluster, the compute for the empty cluster can be disabled and powered down. This mechanism is shown in figure 7, where an active TRP is one which has active user devices connected.

At 708, cluster 1 scheduler 704 reports to RIC 702 that 3 of 8 TRPs in its cluster are active. At 710, cluster 2 scheduler 706 reports to RIC 702 that 2 of 8 TRPs in its cluster are active. This reporting may correspond to the utilisation information described herein, for example the utilisation information described in relation to figures 5 and 6. It will be appreciated that the form of the utilisation information may vary depending on implementation. For example, in some cases a percentage may be reported rather than a number of active TRPs. In some cases, a message that indicates the presence of an active or inactive TRP may be sent instead without further quantification.

At 712, RIC 702 determines that cluster 2 should be combined into cluster 1. For example, the RIC 702 may determine that a re-clustering condition is satisfied. This may be based on the utilisation of one or more radio devices reported by the cluster schedulers at 704 and/or 706, and/or this may be based on a re-clustering start condition, time of day condition, or historical utilisation condition being satisfied.

At 714, the RIC 702 signals the cluster 1 scheduler 704 to adopt 6 new TRPs and the signatures that the TRPs should use (i.e. the TRPs removed in step 716). At 716, the RIC 702 signals the cluster 2 scheduler 706 to remove the 6 unused (i.e. inactive) TRPs.

At 718, cluster 2 scheduler 706 reports to the RIC 702 that 1 of 2 TRPs in its cluster are active. At 720, RIC 702 signals the cluster 1 scheduler 704 to adopt 1 new TRP and the signature that the TRP should use. At 722, RIC 702 signals the cluster 2 scheduler 706 to remove the unused TRP. At step 724, the cluster 2 scheduler 706 reports to the RIC 702 that 0 of 1 TRPs in its cluster are active. In other words, at step 724, the remaining TRP is inactive.

At 726, RIC 702 signals the cluster 1 scheduler 704 to adopt 1 new TRP and the signature that should be used by the TRP. At 728, the RIC 702 signals the cluster 2 scheduler to remove the last remaining TRP and power down its cluster compute. It will be appreciated that at 728 the RIC 702 may signal a scheduler instance manager that manages resource allocation for the cluster 1 scheduler 704 and cluster 2 scheduler 706 to power down the compute for the cluster 2 scheduler 706 rather than signalling the cluster 2 scheduler 706 directly.

At 730, combining of cluster 2 into cluster 1 is complete.

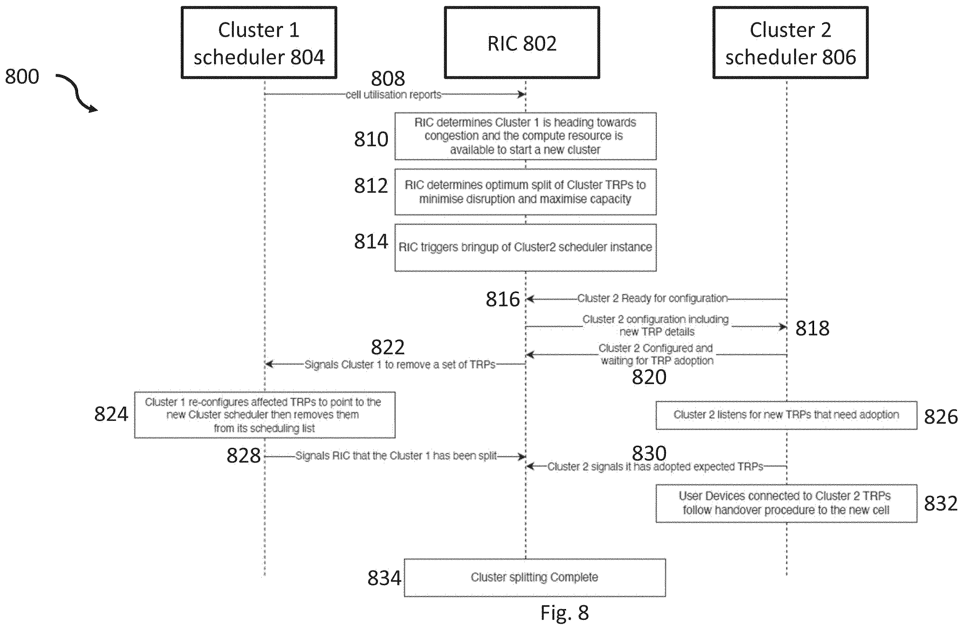

A similar example process may take place when disaggregating a cluster, which will now be described with reference to figure 8.

Figure 8 shows interactions between cluster 1 scheduler 804, RIC 802 (i.e. a controller), and cluster 2 scheduler 806. Process 800 may be performed in any of networks 100, 200, 300, or 400 of figures 1, 2, 3, and 4. RIC 802 may perform method 500, and cluster 1 scheduler 804 and cluster 2 scheduler 806 may perform method 600. Cluster 1 scheduler 804, RIC 802, and cluster 2 scheduler 806 may correspond to cluster 1 scheduler 704, RIC 702, and cluster 2 scheduler 706, respectively.

In a similar manner as for step 708 of figure 7, at step 808 of figure 8, cluster 1 scheduler 804 reports its cell utilisation (i.e. the utilisation of its radio devices). In examples, cluster 1 scheduler 804 sends utilisation information to the RIC 802 as discussed herein.

At step 810, RIC 802 determines that the utilisation of cluster 1 satisfies a predetermined threshold and thus that the cluster is heading towards congestion. RIC 802 may also determine that the compute resource is available to start a new cluster. For example, the RIC 802 may communicate with a scheduler instance manager to determine whether there is compute resource available for creating an additional scheduler instance to schedule a new cluster.

At step 812, RIC 802 determines an optimum split of cluster TRPs (i.e. radio devices) to minimise disruption and maximise capacity. In some examples, RIC 802 determines which radio devices to split from the cluster based on the utilisation information received from cluster 1 scheduler 804. For example, the RIC 802 may determine to split a predetermined number of radio devices corresponding to the predetermined number of least utilised radio devices of cluster 1. In some examples, if the number of active or idle users is to be increased, a new cluster may be created from radio devices with a relatively high idle user count and low activity. In some examples, if the scheduling capacity is to be increased, demand may be balanced between the existing and new cluster, thereby acknowledging a balance between disruption and enhanced capacity.

At step 814, RIC 802 triggers the bringing up of the cluster 2 scheduler 806. As described herein, RIC 802 may signal a scheduler instance manager to change the processing resource allocation allocated for executing the scheduler instances. For example, the scheduler instance manager may be signalled to allocate additional resources to create an additional scheduler instance (i.e. the cluster 2 scheduler 806).

At steps 816 and 818, the cluster 2 scheduler 806 signals to the RIC 802 that it is ready for configuration, and in response, RIC 802 sends configuration information including information relating to the TRPs that are to be adopted (i.e. the TRPs that were determined to be split from cluster 1 in step 812).

At step 820, cluster 2 scheduler 806 instance signals the RIC 802 that the scheduler instance is configured and ready for TRP adoption. At step 822, RIC 802 signals the cluster 1 scheduler 804 to remove the TRPs determined to be removed in step 812.

At step 824, cluster 1 scheduler 804 reconfigures the affected TRPs (i.e. the TRPs identified from step 822) to point to the new cluster scheduler (i.e. cluster 2 scheduler 806) and then removes the affected TRPs from its scheduling list. At step 826, cluster 2 scheduler 826 listens for new TRPs to adopt.

At step 828, cluster 1 scheduler 804 signals the RIC 802 that cluster 1 has been split. At step 830, cluster 2 scheduler 806 signals it has adopted the TRPs (after having performed the adoption process discussed herein). At step 832, the user devices connected to cluster 2 TRPs follow handover procedures to the new cell/cluster. At step 834, cluster splitting/disaggregation of cluster 1 into cluster 1 and cluster 2 is complete.

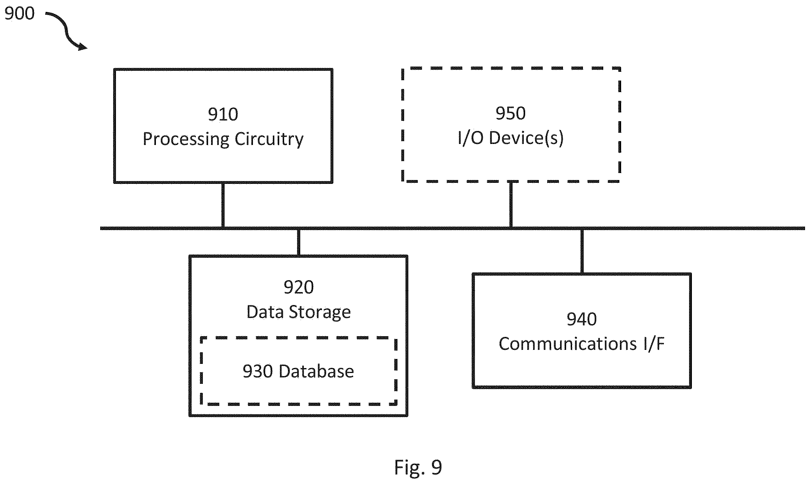

Figure 9 schematically illustrates an example of an electronic device 900 which can be used to implement teachings described above, including method 500, method 600, and the schedulers and RIC of process 700 and 800.

The electronic device 900 has processing circuitry 910 for performing data processing in response to program instructions and data storage 920 for storing data and instructions to be processed by the processing circuitry 910. In some examples, the processing circuitry 910 includes one or more caches for caching recent data or instructions. The data storage 920 may have a database 930 which can, for example, store cluster information and/or utilisation information. The device further includes a communication interface 940 which can be used, for example, to obtain/receive utilisation information and information relating to the allocation of radio devices to clusters. It will be appreciated that Figure 9 is merely an example of possible hardware that may be provided in the device and other components may also be provided. The device 900 may additionally or alternatively be provided with one or more user input/output device(s) 950 to receive input from a user device (e.g. to start the re-clustering) or to output information (e.g. information relating to network utilisation or clustering) to a user device.

The methods discussed above may be performed under control of a computer program executing on a device. Hence a computer program may comprise instructions for controlling a device to perform any of the methods discussed above. The program can be encoded in a computer-readable medium. A computer-readable medium may include non-transitory type media such as physical storage media including storage discs and solid state devices. A computer-readable medium may also or alternatively include transient media such as carrier signals and transmission media. A computer-readable storage medium is defined herein as a non-transitory memory device. A memory device includes memory space within a single physical storage device or memory space spread across multiple physical storage devices.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative teachings of the disclosure have been described in detail herein with reference to the accompanying drawings, it is to be understood that the invention is not limited to those precise teachings, and that various changes and modifications can be effected therein by one skilled in the art without departing from the scope and spirit of the invention as defined by the appended claims.

Examples are set out in the following numbered clauses:
1. A computer-implemented method for performing dynamic clustering of radio devices in a Cooperative Multi-Point network, the network comprising a plurality of radio devices, one or more clusters of radio devices of the plurality of radio devices, one or more scheduler instances each associated with a cluster of the one or more clusters, and a controller, the method comprising:
   determining that a re-clustering condition associated with utilisation of one or more radio devices in a given cluster is satisfied, wherein radio devices in a given cluster are operable to be scheduled by a same scheduler instance;
   in response to determining that the re-clustering condition is satisfied:
      signalling a scheduler instance associated with the given cluster to remove the one or more radio devices from the given cluster;
      changing a processing resource allocation allocated for executing the one or more scheduler instances; and
      signalling a second scheduler instance to adopt the one or more radio devices.
2. The method of clause 1, further comprising:
   receiving utilisation information from the scheduler instance associated with the given cluster,
   wherein determining that the re-clustering condition is satisfied is based on the received utilisation information.
3. The method of any preceding clause, wherein the utilisation information indicates the presence or absence of active connections between the one or more radio devices in the given cluster and one or more client devices.
4. The method of clause 3, wherein determining that the re-clustering condition is satisfied comprises:
   determining, based on the utilisation information, that the number of active connections of the one or more radio devices is below a predetermined threshold or that the number of the one or more radio devices having active connections is greater than a predetermined threshold.
5. The method of any preceding clause, wherein determining that the re-clustering condition is satisfied is in response to determining one or more of: that a current time of day satisfies a predetermined condition; that a determined historical utilisation satisfies a predetermined condition; that a data demand satisfies a predetermined threshold; that a number of active connections satisfies a predetermined threshold; and that a start condition indicating that re-clustering is to be performed is satisfied.
6. The method of any preceding clause, wherein the network further comprises a scheduler manager configured to manage the processing resource allocation of the one or more scheduler instances, and wherein changing the processing resource allocation comprises signalling the scheduler manager to change the processing resource allocation allocated for executing the one or more scheduler instances.
7. The method of any preceding clause, wherein it is determined that the number of active connections of the one or more radio devices is zero and wherein the second scheduler instance is associated with a pre-existing cluster of radio devices, wherein changing the processing resource allocation comprises:
   in response to determining that removal of the one or more radio devices from the given cluster is to cause the number of remaining radio devices allocated to the given cluster to fall below a predetermined threshold, causing a processing resource allocation allocated to the scheduler instance of the given cluster to be reduced.
8. The method of clause 7, wherein causing the processing resource allocation allocated to the scheduler instance of the given cluster to be reduced comprises causing the scheduler instance of the given cluster to be powered down.
9. The method of any of clauses 7 or 8, wherein causing the processing resource allocation allocated to the scheduler instance of the given cluster to be reduced comprises signalling a scheduler manager of the scheduler instance to reduce the processing resource allocation of the scheduler instance or power down the scheduler instance.
10. The method of any preceding clause, wherein it is determined that the number of the one or more radio devices having active connections is greater than a predetermined threshold, wherein changing the processing resource allocation comprises:
   initialising the second scheduler instance and causing additional processing resources to be allocated to the second scheduler instance.
11. The method of clause 10, wherein causing additional processing resources to be allocated to the second scheduler instance comprises signalling a scheduler manager to create the second scheduler instance and allocate additional processing resources to the second scheduler instance.
12. The method of any preceding clause, wherein signalling the scheduler instance and the second scheduler instance comprises sending a message indicating the one or more radio devices to remove or adopt to the scheduler instance and the second scheduler instance.
13. The method of clause 12, wherein the message sent to the second scheduler instance comprises one or more signatures assigned to the one or more radio devices for broadcasting by the one or more radio devices.
14. The method of clauses 2 to 13, wherein the utilisation information comprises information indicating the number of inactive radio devices in relation to the total number of radio devices in the given cluster, and information identifying the inactive radio devices.
15. A network controller comprising one or more processors configured to perform the method of any preceding clause.
16. A computer-readable medium comprising instructions which, when executed by one or more processors, cause the one or more processors to perform the method of any of clauses 1 to 14.
17. A computer-implemented method for a scheduler arrangement having a scheduler instance and a scheduler manager, the scheduler arrangement in a Cooperative Multi-Point network, the network comprising a plurality of radio devices, one or more clusters of radio devices of the plurality of radio devices, and a controller, the method comprising:
   determining utilisation information indicative of a utilisation of one or more radio devices in a cluster associated with the scheduler instance;
   sending the utilisation information to the controller;
   receiving an instruction from the controller to remove or adopt a radio device of the plurality of radio devices;
   removing or adopting the radio device based on the instruction to remove or adopt the radio device;
   receiving an instruction to reduce a processing resource allocation allocated to the scheduler instance or to create a further scheduler instance; and
   reducing a processing resource allocation allocated to the scheduler instance in response to the instruction to reduce the processing resource allocation allocated to the scheduler or allocating additional processing resources to the further scheduler instance in response to the instruction to create a further scheduler instance.
18. The method of clause 17, wherein the utilisation information indicates the presence or absence of active connections between the one or more radio devices in the given cluster and one or more client devices.
19. The method of any of clauses 17 or 18, wherein reducing the processing resource allocation comprises powering down the scheduler instance.
20. The method of any preceding clause, wherein the scheduler instances are virtual machine instances.
21. A system for supporting a Cooperative Multi-Point network, the network comprising a plurality of radio devices, one or more clusters of radio devices of the plurality of radio devices, one or more scheduler arrangements each associated with a cluster of the one or more clusters, and a controller, the system comprising a controller configured to perform the method of any of clauses 1 to 14, and a scheduler arrangement configured to perform the method of any of clauses 17 to 20.

## Claims

1. A computer-implemented method for performing dynamic clustering of radio devices in a Cooperative Multi-Point network, the network comprising a plurality of radio devices, one or more clusters of radio devices of the plurality of radio devices, one or more scheduler instances each associated with a cluster of the one or more clusters, and a controller, the method comprising:
determining that a re-clustering condition associated with utilisation of one or more radio devices in a given cluster is satisfied, wherein radio devices in a given cluster are operable to be scheduled by a same scheduler instance;
in response to determining that the re-clustering condition is satisfied:
signalling a scheduler instance associated with the given cluster to remove the one or more radio devices from the given cluster;
changing a processing resource allocation allocated for executing the one or more scheduler instances; and
signalling a second scheduler instance to adopt the one or more radio devices.

2. The method of claim 1, further comprising:
receiving utilisation information from the scheduler instance associated with the given cluster,
wherein determining that the re-clustering condition is satisfied is based on the received utilisation information.

3. The method of any preceding claim, wherein the utilisation information indicates the presence or absence of active connections between the one or more radio devices in the given cluster and one or more client devices.

4. The method of claim 3, wherein determining that the re-clustering condition is satisfied comprises:
determining, based on the utilisation information, that the number of active connections of the one or more radio devices is below a predetermined threshold or that the number of the one or more radio devices having active connections is greater than a predetermined threshold.

5. The method of any preceding claim, wherein determining that the re-clustering condition is satisfied is in response to determining one or more of: that a current time of day satisfies a predetermined condition; that a determined historical utilisation satisfies a predetermined condition; that a data demand satisfies a predetermined threshold; that a number of active connections satisfies a predetermined threshold; and that a start condition indicating that re-clustering is to be performed is satisfied.

6. The method of any preceding claim, wherein the network further comprises a scheduler manager configured to manage the processing resource allocation of the one or more scheduler instances, and wherein changing the processing resource allocation comprises signalling the scheduler manager to change the processing resource allocation allocated for executing the one or more scheduler instances.

7. The method of any preceding claim, wherein it is determined that the number of active connections of the one or more radio devices is zero and wherein the second scheduler instance is associated with a pre-existing cluster of radio devices, wherein changing the processing resource allocation comprises:
in response to determining that removal of the one or more radio devices from the given cluster is to cause the number of remaining radio devices allocated to the given cluster to fall below a predetermined threshold, causing a processing resource allocation allocated to the scheduler instance of the given cluster to be reduced.

8. The method of claim 7, wherein causing the processing resource allocation allocated to the scheduler instance of the given cluster to be reduced comprises signalling a scheduler manager of the scheduler instance to reduce the processing resource allocation of the scheduler instance or power down the scheduler instance.

9. The method of any preceding claim, wherein it is determined that the number of the one or more radio devices having active connections is greater than a predetermined threshold, wherein changing the processing resource allocation comprises:
initialising the second scheduler instance and causing additional processing resources to be allocated to the second scheduler instance.

10. The method of claim 9, wherein causing additional processing resources to be allocated to the second scheduler instance comprises signalling a scheduler manager to create the second scheduler instance and allocate additional processing resources to the second scheduler instance.

11. A network controller comprising one or more processors configured to perform the method of any preceding claim.

12. A computer-readable medium comprising instructions which, when executed by one or more processors, cause the one or more processors to perform the method of any of claims 1 to 10.

13. A computer-implemented method for a scheduler arrangement having a scheduler instance and a scheduler manager, the scheduler arrangement in a Cooperative Multi-Point network, the network comprising a plurality of radio devices, one or more clusters of radio devices of the plurality of radio devices, and a controller, the method comprising:
determining utilisation information indicative of a utilisation of one or more radio devices in a cluster associated with the scheduler instance;
sending the utilisation information to the controller;
receiving an instruction from the controller to remove or adopt a radio device of the plurality of radio devices;
removing or adopting the radio device based on the instruction to remove or adopt the radio device;
receiving an instruction to reduce a processing resource allocation allocated to the scheduler instance or to create a further scheduler instance; and
reducing a processing resource allocation allocated to the scheduler instance in response to the instruction to reduce the processing resource allocation allocated to the scheduler or allocating additional processing resources to the further scheduler instance in response to the instruction to create a further scheduler instance.

14. The method of claim 13, wherein the utilisation information indicates the presence or absence of active connections between the one or more radio devices in the given cluster and one or more client devices.

15. A system for supporting a Cooperative Multi-Point network, the network comprising a plurality of radio devices, one or more clusters of radio devices of the plurality of radio devices, one or more scheduler arrangements each associated with a cluster of the one or more clusters, and a controller, the system comprising a controller configured to perform the method of any of claims 1 to 10, and a scheduler arrangement configured to perform the method of any of claims 13 to 14.
